# EUROPÄISCHE PATENTSCHRIFT

(11) **EP 1 082 565 B1**
(45) Veröffentlichungstag und Bekanntmachung des Hinweises auf die Patenterteilung: **16.04.2003**
(21) Anmeldenummer: 99927806.2
(22) Anmeldetag: 31.05.1999
(51) Int. Cl.: F16K 17/30

(54) **GASSTRÖMUNGSWÄCHTER**
GAS STREAM MONITOR
CONTROLEUR DE FLUX GAZEUX

(30) Priorität: 02.06.1998 DE 29809839 U
(43) Veröffentlichungstag der Anmeldung: 14.03.2001
(73) Patentinhaber: Mertik Maxitrol GmbH & Co. KG, 06502 Thale (DE)
(72) Erfinder: SCHULZE, Klaus, D-06507 Gernrode (DE)
(74) Vertreter: Albrecht, Günter
(86) Internationale Anmeldenummer: EP9903753
(87) Internationale Veröffentlichungsnummer: WO99063254

(56) Entgegenhaltungen:
- GB-A- 2 247 735
- US-A- 5 105 850

## Beschreibung

### Technisches Gebiet

Die Erfindung betrifft einen Gasströmungswächter zum automatischen Absperren von Gasleitungen beim Auftreten einer unzulässigen Durchflußerhöhung nach dem Oberbegriff von Anspruch 1.

Ein derartiger Gasströmungswächter ist beispielsweise aus GB-A- 2 247 735 bekannt.

### Stand der Technik

Weitere Gasströmungswächter, die in Rohrleitungen, wie zum Beispiel vor Gasarmaturen, Gasgeräten usw., eingesetzt werden, gibt es in einer Vielzahl von Ausführungen. Sie dienen dazu, bei einer Erhöhung des Gasverbrauches über einen vorgegebenen Wert die Gaszufuhr zu unterbrechen.

So ist in der WO 92/01184 ein Gasströmungswächter der eingangs genannten Art beschrieben, der bei einer auftretenden Beschädigung des Rohrleitungssystems dieses verschließt, ohne jedoch ein vorzeitiges Verschließen der Zuleitung zu bewirken. wenn ein Verbraucher über einen längeren Zeitraum die seiner Leistung entsprechende Gasmenge benötigt. Bei dieser sogenannten Sicherheitsschließvorrichtung ist ein Ventil als Tellerventil ausgebildet.

Dabei ist der Ventilkörper auf einem Ventilschaft befestigt, der beidseitig in Gleitlagern in axialer Richtung des Ventils entgegen der Kraft einer Feder verschiebbar gelagert ist. Der Ventilteller wirkt dabei mit einem in einer von zwei Ringscheiben befindlichen Ventilsitz zusammen, wobei die Ringscheiben gleichzeitig als Lagerung für die weiter oben bereits genannten Gleitlager dienen. Die Ringscheiben sind mit Ausnehmungen bzw. Durchbrüchen versehen.

Um den Schließdurchfluß an die Art, Natur und Menge der Verbraucher exakt anpassen zu können, ist die Federkraft der Feder und/oder der Schließweg des Ventils einstellbar. Für eine Verstellung des Schließweges des Ventils ist dazu am freien Ende des Ventilschaftes eine Mutter vorgesehen, die auf einem auf dem Ventilschaft befindlichen Gewinde aufgeschraubt ist. Für die Einstellung der Federkraft dient eine im Bereich zwischen den beiden Gleitlagern angeordnete, beispielsweise von einer zweiten Mutter gebildete Verstelleinrichtung.

Desweiteren ist aus der GB - PS 556,863 ein automatisch wirkendes Absperrventil bekannt. Dieses Absperrventil besteht aus einem, beidseitig ein Anschlußgewinde aufweisendes, rohrförmigen Gehäuse. Im Gehäuse ist eine mit Durchbrüchen versehene Ringscheibe angeordnet, die mittig ein Gleitlager für einen längsbeweglichen Ventilschaft aufweist, der an einem Ende einen Ventilkörper besitzt, der mit einem im Gehäuse befindlichen Ventilsitz zusammenwirkt. Eine sich einerseits am Ventilkörper und andererseits an der Ringscheibe abstützende Druckfeder hält den Ventilkörper bis zum Erreichen des eingestellten Schließdurchflusses in Offenstellung. Zur Änderung des Schließdurchflusses erfolgt auch bei dieser Ausführung eine Veränderung der Einstellung der Federkraft, indem die Einschraubtiefe des Ventilschaftes in eine Haube, und damit die Einbaulänge der Feder verändert wird.

Einen ähnlichen Aufbau besitzt ein in der US - PS 3,794.077 beschriebenes Ventil. Eine sich einerseits an einem im Gehäuse befindlichen, und ebenfalls Durchbrüche aufweisendes, Gleitlager und andererseits an einer auf dem Ventilschaft aufgeschraubten Mutter sich abstützende Druckfeder hält den Ventilkörper bis zum Erreichen des eingestellten Schließdurchflusses in Offenstellung. Durch ein Verändem der Lage der Mutter, die jedoch durch einen Stift gegen ein Verdrehen gesichert ist. auf dem Ventilschaft wird auch hier die Einbaulänge der Druckfeder und damit über die Änderung der Federkraft der Schließdurchfluß verändert.

Bei allen diesen Lösungen ist es von Nachteil, daß die Einstellung des Schließdurchflusses nur durch Eingriffe im Inneren des Gasströmungswächters möglich ist. und somit bereits bei der Fertigung derselben zu erfolgen hat. Das bedeutet jedoch, daß bereits zu diesem Zeitpunkt der jeweilige Anwendungsfall, das heißt die technischen Parameter der dem Einbauort nachgeordneten Verbraucher, bekannt sein muß. Für jeden Anwendungsfall gibt es deshalb bisher spezielle Gasströmungswächter.

Bei den bisher bekannten Gasströmungswächtern wird nach einem Schließen auf Grund eines über dem Schließdurchfluß liegenden Gasverbrauches, beispielsweise durch eine Beschädigung einer Gasleitung oder eines schadhaften Verbrauchers, der Gasströmungswächter nach erfolgter Beseitigung des Fehlers dadurch wieder geöffnet, daß verbraucherseitig ein Druck aufgebaut wird, bis der Ventilteller vom Ventilsitz abhebt und somit der Durchflußquerschnitt wieder freigegeben ist. Diese Verfahrensweise ist jedoch zumeist sehr zeitaufwendig.

Möglich ist auch die Verwendung einer im Ventitteller befindlichen Überströmöffnung. Hierbei erfolgt nach Beseitigung des Fehlers und Schließen aller Verbraucher über die Überströmöffnung ein Druckaufbau in der verbraucherseitigen Gasleitung, bis ein Druckausgleich erfolgt ist und der Gasströmungswächter wieder öffnet. Von Nachteil ist, daß auch beim Schließen des Gasströmungswächters im Havariefall eine entsprechende Leckgasmenge durch den Gasströmungswächter strömt.

### Darstellung der Erfindung

Der Erfindung liegt das Problem zugrunde, einen Gasströmungswächter der genannten Art zu entwickeln, bei dem die Einstellung/Änderung des Schließdurchflusses auch noch nach der Fertigung möglich ist. Insbesondere soll es auch ermöglicht werden eine Veränderung des Schließdurchflusses noch im eingebauten Zustand durchführen zu können. Erfindungsgemäß wird das Problem durch einen Gasströmungswächter gemäß Anspruch 1 gelöst.

Damit wurde eine Lösung gefunden, mit der die bisherigen Nachteile des Standes der Technik, daß die Einstellung des Schließdurchflusses nur durch Eingriffe im Inneren des Gasströmungswächters möglich ist, und somit bereits bei der Fertigung derselben zu erfolgen hat, beseitigt.

Weitere vorteilhafte Ausgestaltungen der Erfindung gehen aus den abhängigen Patentansprüchen hervor. So ist es beispielsweise möglich, daß im Gehäuse zwei oder mehrere Schließkörper parallel angeordnet sind, wobei jedem Schließkörper eine Handhabe mit einem in das Innere des Gehäuses führenden Stößel zugeordnet ist, die eine Einstellung der Federvorspannung und/oder des Hubes des Schließkörpers ermöglicht.

Als besonders vorteilhaft erweist es sich, wenn mit der zur Einstellung der Federvorspannung und/oder des Hubes des Schließkörpers dienenden Handhabe auch die Schließstellung des Schließkörpers eingestellt werden kann. Dadurch wird es ermöglicht, daß mit diesem Gasströmungswächter zusätzlich auch die Funktion eines Absperrventils übernommen werden kann.

Günstigerweise ist die Kulissenbahn beispielsweise für Vorzugswerte des Schließdurchflusses mit Raststellungen versehen.

Eine weitere Ausgestaltung der Erfindung besteht darin, daß der in Schließstellung befindliche Schließkorper mittels eines von außen betätigbaren Tasters aus der Schließstellung bewegbar ist. Damit ist es möglich, nach erfolgter Beseitigung des Fehlers und Schließen aller Verbraucher einen Druckaufbau in der verbraucherseitigen Gasleitung herbeizuführen, bis ein Druckausgleich erfolgt ist und der Gasströmungswächter geöffnet bleibt. Eine Überströmöffnung kann entfallen und damit ein dichtes Schließen realisiert werden.

Besonders günstig ist die Ausführung, bei der die Kulissenbahn eine Steuerschräge aufweist, wobei gleichzeitig der Stößel derart mit dem Schaft des Schließkörpers in Eingriff steht, daß durch Betätigung der Handhabe der Schließkörper unter Einfluß der Steuerschräge aus seiner Schließstellung bewegbar ist und nach beendeter Betätigung jedoch die Handhabe selbsttätig den Wirkungsbereich der Steuerschräge verläßt. Bei dieser Lösung ist zum einen kein separater Taster notwendig, sondern die Funktion des Tasters ist in die Handhabe integriert. Zum anderen entfällt damit auch die ansonsten notwendige Durchgangsbohrung im Gehäuse.

Um den Einstellwert des Schließdurchflusses zu verändern kann statt der Änderung der Federkraft der Schließhub verändert werden. Das ist dadurch möglich, daß die Verbindung zwischen der Handhabe und dem Stößel justierbar ist, d.h. indem beispielsweise die Einpreß- oder Einschraubtiefe des Stößels verändert wird.

### Ausführungsbeispiel

Die Erfindung wird nachstehend an einem Ausführungsbeispiel näher beschrieben.
Es zeigen:
- Fig. 1: einen erfindungsgemäßen Gasströmungswächter in schematischer Darstellung im Schnitt in Offenstellung.
- Fig. 2: einen erfindungsgemäßen Gasstromungswächter in schematischer Darstellung im Schnitt in Schließstellung.
- Fig. 3: einen erfindungsgemäßen Gasströmungswächter in schematischer Darstellung im Schnitt in Schließstellung bei betätigtem Taster,
- Fig. 4: einen erfindungsgemäßen Gasströmungswächter in schematischer Darstellung im Schnitt in Schließstellung mit anderer Tasterausführung,
- Fig. 5: einen erfindungsgemäßen Gasströmungswächter in schematischer Darstellung im Schnitt in Geschlossenstellung als Absperrhahn.

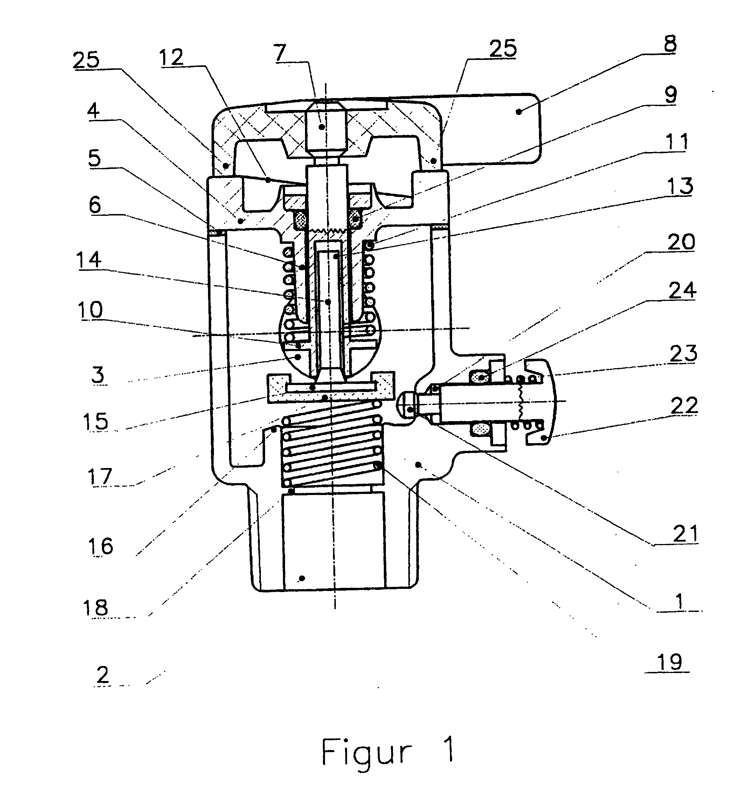

Der in Fig. 1 dargestellte erfindungsgemaße Gasströmungswächter besitzt ein topfförmiges Gehäuse 1 mit einem im Boden angeordneten Gasausgang 2 und einem in diesem Ausführungsbeispiel rechtwinklig dazu angeordneten Gaseingang 3. Beide weisen selbstredend jeweils einen Anschluß für eine Gasleitung auf, der in diesem Fall beim Gasausgang 2 durch eine Gewindeverbindung dargestellt ist. Es versteht sich von selbst, daß auch ein anderer Anschluß möglich ist.

Das Gehäuse 1 ist mit einem Deckel 4 gasdicht, beispielsweise mittels einer dazwischen liegenden Flachdichtung 5, fest verschlossen. Mittig weist der Deckel 4 einen in das Gehäuse 1 hineinragenden, vorzugsweise mit dem Deckel 4 einstükkig verbundenen hülsenförmigen Fortsatz 6 auf, in dem ein Stößel 7 längsbeweglich und drehbar geführt ist, auf dessen aus dem Deckel 4 herausragenden Ende sich eine fest mit dem Stößel 7 verbundene Handhabe 8 befindet. Um die Gasdichtheit zu gewährleisten, ist an der Durchführungsstelle des Stößels 7 durch den Deckel 4 ein Rundring 9 angeordnet.

Auf seinem im Gehäuse 1 außerhalb des Fortsatzes 6 befindlichen Umfang besitzt der Stößel 7 einen umlaufenden Bund 10, auf dem sich eine Druckfeder 11 abstützt, die mit ihrem anderen Ende am Deckel 4 anliegt. Dadurch wird die Handhabe 8, die zu diesem Zweck zwei dem Deckel 4 zugewandte gegenüberliegende Schenkel 25 aufweist, kraftschlüssig mit den Stirnseiten der Schenkel 25 gegen einen als Anschlag dienenden auf der dem Gehäuse 1 abgewandten Seite des Deckels 4 befindlichen ringförmigen Bund gezogen. Dieser Bund ist in seiner Höhe so gestattet, daß er jeweils eine Kulissenbahn 12 für jeden der Schenkel 25 der Handhabe 8 bildet. Beide Kulissenbahnen 12 sind durch einen nicht dargestellten Querschlitz getrennt, dessen Funktion weiter unten näher erläutert wird.

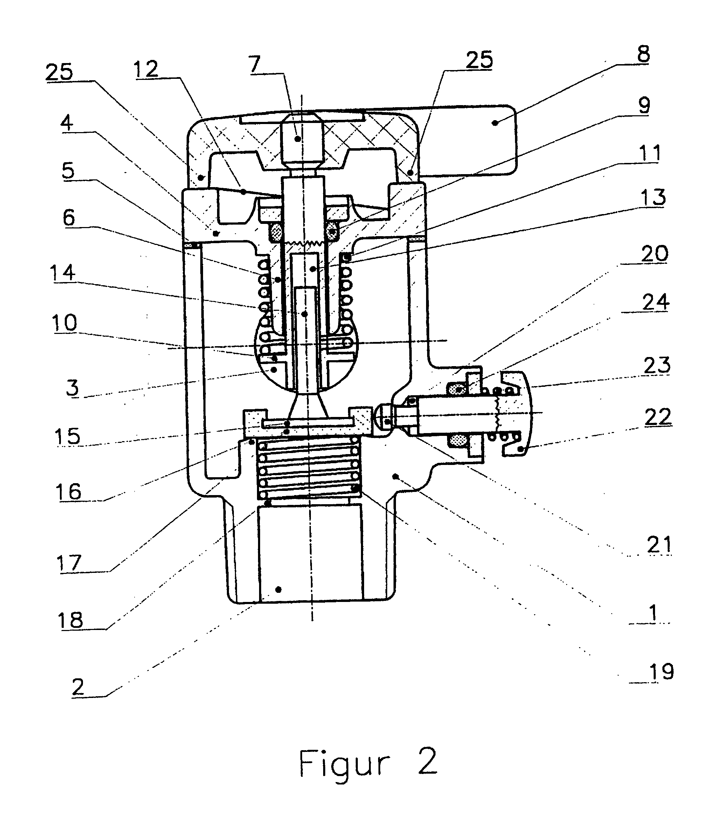

In seinem im Gehäuse 1 befindlichen stimseitigen Ende ist der Stößel 7 mit einer Sackbohrung 13 versehen, in der längsbeweglich der Schaft 14 eines Schließkörpers 15 geführt wird, dem ein einstückig mit dem Boden des Gehäuses 1 verbundener Ventilsitz 16 zugeordnet ist, wodurch in Schließstellung der Gasausgang 2 dicht verschlossen ist (Fig. 2). Um die Gasdichtheit in jedem Fall zu gewährleisten, weist der Schließkörper 15 zumindest im Dichtungsbereich eine zusätzliche elastische Dichtung 17 auf. Im Gasausgang 2 stützt sich auf einem umlaufenden Absatz 18 eine Druckfeder 19 ab, die mit ihrem anderen Ende den Schließkörper 15 in Öffnungsrichtung belastet.

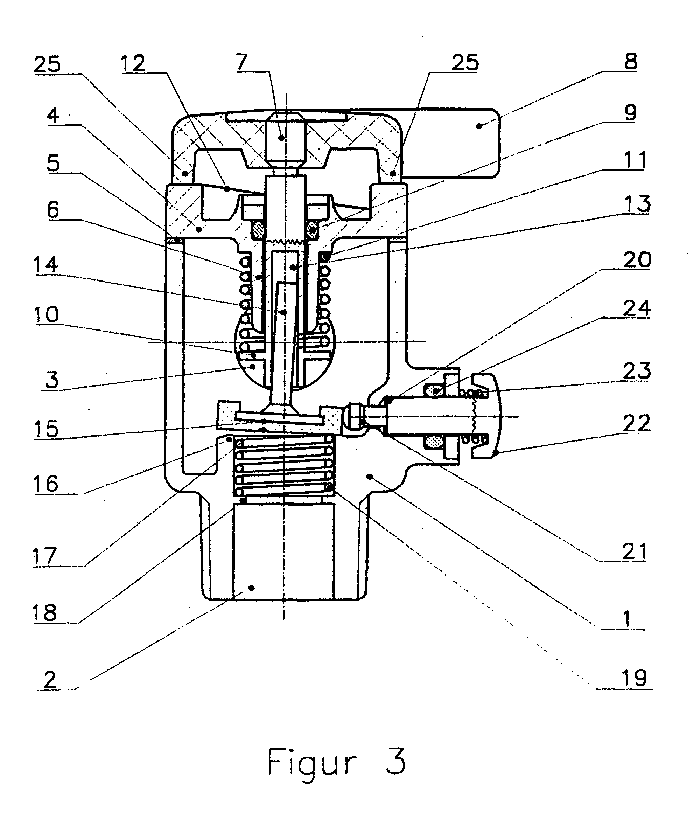

Das Gehäuse 1 weist desweiteren auf seinem Umfang in Höhe des in Schließstellung befindlichen Schließkörpers 15 eine radiale Bohrung 20 auf, in der ein Stößel 21 gasdicht, zum Beispiel in diesem Ausführungsbeispiel durch die Verwendung eines Rundringes 24, geführt und über einen von außen betätigbaren Taster 22 gegen die Kraft einer Druckfeder 23 so weit in Längsrichtung bewegbar ist, daß durch die seitlich erfolgende Auslenkung des Schließkörpers 15 trotz vorhandener Schließstellung desselben ein Öffnungsspalt entsteht (Fig. 3).

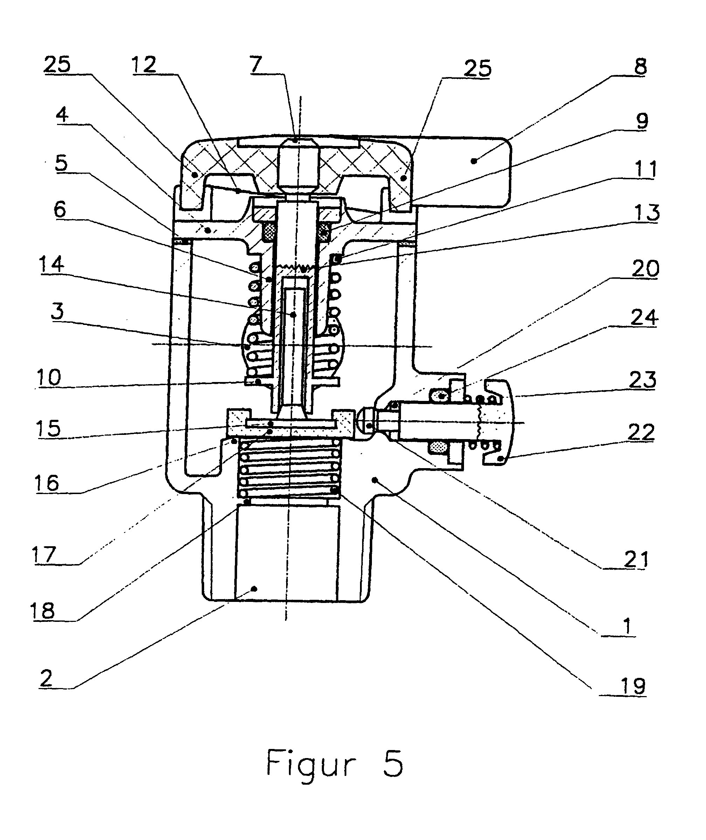

Die Länge des Stößels 7 ist so festgelegt, daß seine Stimseite auf dem Schließkörper 15 zur Auflage kommt und diesen dabei in die Schließstellung drückt, wenn sich die Schenkel 25 in dem bereits weiter oben erwähnten Querschlitz des Dekkels 4 befinden. Der Bereich des Schließkörpers 15 wo der Stößel 7 zur Auflage kommt, d.h. in diesem Fall der Übergang des Schließkörpers 15 zum Schaft 14, ist so ausgebildet, daß in dieser Geschlossenstellung eine seitliche Auslenkung des Schließkörpers 15 mittels des Tasters 22 durch das fehlende Spiel sicher verhindert wird (Fig. 5).

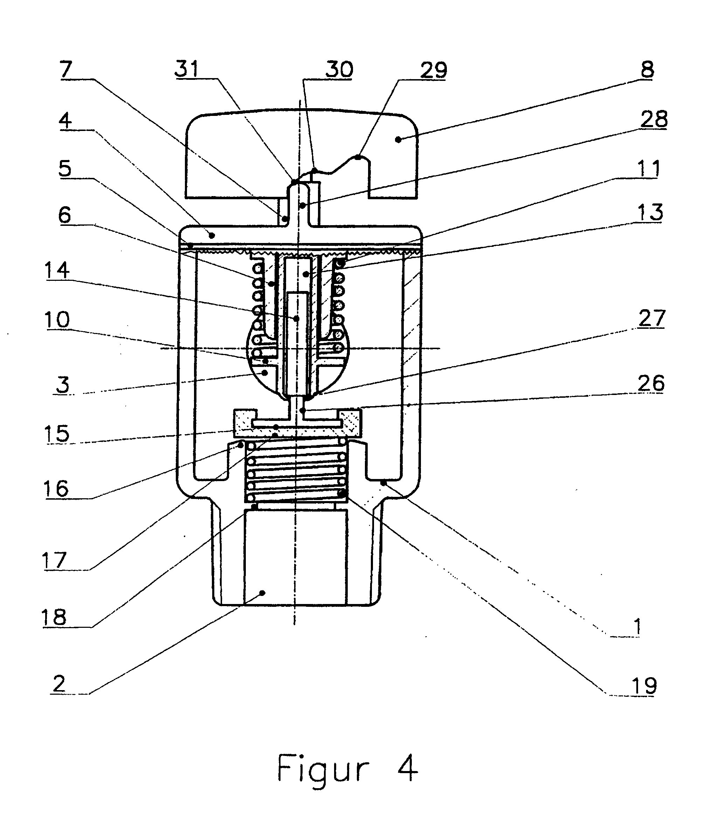

In Fig. 4 ist der Gasströmungswächter mit einer anderen Tasterausführung dargestellt. Um die bei dem weiter oben beschriebenen Ausführungsbeispiel notwendige Bohrung 20 im Gehäuse 1 zu vermeiden, ist die Tasterfunktion in der Handhabe 8 integriert. Dazu wurde der Schaft 14 des Schließkörpers 15 im Bereich des Überganges mit einer Einschnürung 26 versehen, in welcher das nach Innen gekröpfte Ende 27 des Stößels 7 gleiten kann. Gleichzeitig wurde die Kulissenbahn 12 in die Handhabe 8 verlegt. In die Kurvenbahn 12 ragt ein auf dem Deckel 4 befindlicher Steg 28.

Zusätzlich zu der Absperrstellung 29 und in diesem Ausführungsbeispiel aus Gründen der Übersichtlichkeit einzigen Normalstellung 30 für den zu überwachenden Durchfluß besitzt die Kurvenbahn 12 eine Steuerschräge 31.

Die Wirkungsweise des erfindungsgemäßen Gasströmungswächters ist wie folgt:

Der Gasströmungswächter befindet sich im Normalfall in der in Fig. 1 dargestellten Stellung. Dabei wird der Schließkörper 15 unter der Einwirkung der Druckfeder 19 und der vorhandenen Druckdifferenz über den Gasströmungswächter in Offenstellung gehalten. Tritt auf Grund einer Beschädigung einer nachgeordneten Gasleitung oder eines nachgeordneten schadhaften Verbrauchers ein über dem Schließdurchfluß liegender Gasverbrauch auf, so wird durch die Erhöhung der Druckdifferenz die Kraft der Druckfeder 19 überwunden und der Schließkörper 15 nimmt die Schließstellung ein (Fig. 2). Die Gaszufuhr ist unterbrochen. Nach Beseitigung des Fehlers und Schließen aller nachgeschalteten Verbraucher wird durch Betätigung des Tasters 22 der Schließkörper 15 seitlich ausgelenkt und es entsteht ein Öffnungsspalt, so daß verbraucherseitig ein Druck aufgebaut wird, und in dessen Folge der Schfießkörper 15 vom Ventilsitz 16 abhebt (Fig. 3).

Bei dem in Fig. 4 dargestellten Ausführungsbeispiel wird statt des Tasters 22 die Handhabe 8 derart betätigt, daß der Steg 28 die Steuerschräge 31 zur Wirkung bringt. Dadurch wird der Schließkörper 15 durch das in der Einschnürung 26 befindliche Ende 27 des Stößels 7 aus seiner Schließstellung bewegt, so daß ebenfalls ein Öffnungsspalt mit den bereits weiter oben genannten Folgen entsteht: Beim Loslassen der Handhabe 8 wird unter dem Einfluß der Kraft der Druckfeder 11 die Steuerschräge 31 wieder außer Eingriff und die Handhabe 8 in die Normalstellung 30 gebracht.

Zur Änderung des eingestellten Schließdurchflusses muß die Stellung der Schenkel 25 auf der ihnen zugeordneten Kulissenbahn 12 verändert werden. Auf Grund des bei der Verdrehung der Handhabe 8 entstehenden Hubes des Stößels 7 wird die Offenstellung des Schließkörpers 15 verschoben und damit die wirksame Kraft der Druckfeder 19 verändert, was zu einer Korrektur des Schließdurchflusses führt.

Um die Gasleitung unabhängig vom Verbrauch abzusperren, d.h. die Funktion eines Absperrventils zu übernehmen, ist die Handhabe 8 so weit zu verdrehen, bis die Schenkel 25 ihre Kulissenbahn 12 verlassen und in den Querschlitz einrasten. Dadurch wird der Stößel 7 unter der Wirkung der Druckfeder 11 so weit bewegt, bis er auf dem Schließkörper 15 und dieser wiederum auf dem Ventilsitz 16 aufsitzt. Durch die zwischen Schließkörper 15 und Schaft 14 befindliche Übergangsschräge wird gleichzeitig das ansonsten vorhandene und benötigte seitliche Spiel verhindert, so daß auch über den Taster 22 kein versehentliches Öffnen erfolgen kann (Fig. 5).

Der erfindungsgemäße Gasströmungswächter ist selbstredend nicht auf das dargestellte Ausführungsbeispiel beschränkt. Vielmehr sind Änderungen und Abwandlungen möglich, ohne den Rahmen der Erfindung zu verlassen. So können beispielsweise die Anschlüsse verändert werden oder die Änderung des eingestellten Schließdurchflusses nicht durch eine Hubänderung, sondern durch eine Lageänderung der Druckfeder 19 erfolgen. Ferner können in einem Gehäuse mehrere Gasströmungswächter mit dann selbstredend eigenen Gasausgängen untergebracht sein oder die Kurvenscheiben 12 mit Raststellungen ausgeführt sein.

Auch kann der Einstellwert des Schließdurchflusses dadurch verändert werden. daß statt der Änderung der Federkraft der Schließhub verändert wird. Das ist dadurch möglich, daß die Verbindung zwischen der Handhabe und dem Stößel justierbar ist, d.h. indem beispielsweise die Einpreß- oder Einschraubtiefe des Stößels verändert wird.

### Aufstellung der Bezugszeichen

- 1: Gehäuse
- 2: Gasausgang
- 3: Gaseingang
- 4: Deckel
- 5: Flachdichtung
- 6: Fortsatz
- 7: Stößel
- 8: Handhabe
- 9: Rundring
- 10: Bund
- 11: Druckfeder
- 12: Kulissenbahn
- 13: Sackbohrung
- 14: Schaft
- 15: Schließkörper
- 16: Ventilsitz
- 17: Dichtung
- 18: Absatz
- 19: Druckfeder
- 20: Bohrung
- 21: Stößel
- 22: Taster
- 23: Druckfeder
- 24: Rundring
- 25: Schenkel
- 26: Einschnürung
- 27: gekröpftes Ende
- 28: Steg
- 29: Absperrstellung
- 30: Normalstellung
- 31: Steuerschräge

## Patentansprüche

1. Gasströmungswächter zum automatischen Absperren von Gasleitungen, bestehend aus einem gasdichten Gehäuse (1) mit Gaseingang (3) und Gasausgang (2), das im Inneren einen Ventilsitz (16) für einen im Gehäuse (1) beweglichen Schließkörper (15) aufweist, der durch Eigengewicht- und/oder Federkraft gegen die Durchströmrichtung in Offenstellung gehalten ist, wobei Durchflußquerschnitt, Fläche des Schließkörpers (15) und Kräfte so festgelegt sind, daß der Schtießkörper (15) bei einem definierten Wert des Schließdurchflusses seine Offenstellung verläßt und gegen den Ventilsitz (16) des Gehäuses (1) bewegt wird, so daß in der Schließstellung der Gasausgang (2) verschlossen ist, und einer außerhalb des Gehäuses (1) angeordneten Handhabe (8) mit einem in das Innere des Gehäuses (1) führenden Stößel (7) zur Einstellung der Federvorspannung und/oder des Hubes des Schließkörpers (15), **dadurch gekennzeichnet, daß** sich die Handhabe (8) auf einer Kulissenbahn (12) abstützt.

2. Gasströmungswächter zum automatischen Absperren von Gasleitungen nach Patentanspruch 1, **dadurch gekennzeichnet, daß** die Kulissenbahn (12) Raststellungen ausweist.

3. Gasströmungswächter zum automatischen Absperren von Gasleitungen nach Patentanspruch 1 oder 2, **dadurch gekennzeichnet, daß** die Kulissenbahn (12) eine Steuerschräge (31) aufweist und daß desweiteren der Stößel (7) derart mit einem Schaft (14) des Schließkörpers (15) in Eingriff steht, daß durch Betätigung der Handhabe (8) der Schließkörper (15) unter Einfluß der Steuerschräge (31) aus seiner Schließstellung bewegbar ist, wobei die Handhabe (8) nach beendeter Betätigung selbsttätig den Wirkungsbereich der Steuerschräge (31) verläßt.

4. Gasströmungswächter zum automatischen Absperren von Gasleitungen nach einem der Patentansprüche 1 bis 3, **dadurch gekennzeichnet, daß** die Verbindung zwischen der Handhabe (8) und dem Stößel (7) justierbar ist.

5. Gasströmungswächter zum automatischen Absperren von Gasleitungen nach einem der Patentansprüche 1 bis 4, **dadurch gekennzeichnet, daß** mit der Handhabe (8) über den in das Innere des Gehäuses (1) führenden Stößel (7) die Schließstellung des Schließkörpers (15) einstellbar ist.

6. Gasströmungswächter zum automatischen Absperren von Gasleitungen nach einem der Patentansprüche 1 bis 5, **dadurch gekennzeichnet, daß** im Gehäuse (1) zwei oder mehrere Schließkörper (15) parallel angeordnet sind, wobei jedem Schließkörper (15) eine Handhabe (8) mit einem in das Innere des Gehäuses (1) führenden Stößel (7) zugeordnet ist, die eine Einstellung der Federvorspannung und/oder des Hubes des Schließkörpers (15) ermöglicht.

## Claims

1. A gas stream monitor to automatically shut off gas conduits, consisting of a gas-tight casing (1) with a gas inlet (3) and a gas outlet (2), that has in its interior a valve seat (16) for a reseat body (15) that is movable inside the casing (1) and which is kept in open position against the flow direction by its own weight and/or spring force, in which the flow cross-section, surface area of the reseat body (15) and forces are determined in such a manner that reseat body (15) leaves its open position upon a defined value of the reseat flow and is moved towards the valve seat (16) of the casing (1) so that the gas outlet (2) is closed in the shut position and a manipulator (8), arranged outside of the casing (1), that has a tappet (7) projecting into the casing (1) interior which is used to adjust the spring pre-tension and/or the stroke of the reseat body (15), **characterised in that** the manipulator (8) is supported by a slide block (12).

2. A gas stream monitor to automatically shut off gas conduits according to patent claim 1, **characterised in that** die slide block (12) has lock-in positions.

3. A gas stream monitor to automatically shut off gas conduits according to patent claims 1 or 2, **characterised in that** the slide block (12) has a control slope (31) and that, in addition, the tappet (7) is interlocked with the shaft (14) of the reseat body (15) so that an actuation of the manipulator (8) can move the reseat body (15), under the impact of the control slope (31), out of its shut position, with the manipulator (8) automatically leaving the range of action of the control slope (31) after the completed actuation.

4. A gas stream monitor to automatically shut off gas conduits according to one of the patent claims 1 to 3, **characterised in that** connection between manipulator (8) and tappet (7) is adjustable.

5. A gas stream monitor to automatically shut off gas conduits according to one of the patent claims 1 to 4, **characterised in that** the shut position of the reseat body (15) can be adjusted with the manipulator (8) via the tappet (7) projecting into the interior of the casing (1).

6. A gas stream monitor to automatically shut off gas conduits according to one of the patent claims 1 to 5, **characterised in that** two or more reseat bodies (15) are arranged in parallel inside the casing (1) with each of the reseat bodies (15) being assigned a manipulator (8) with a tappet (7) projecting into the casing (1) interior that facilitates an adjustment of the spring pre-tension and/or the stroke of the reseat body (15).

## Revendications

1. Contrôleur de passage de gaz pour la fermeture automatique de tuyauteries de gaz, constitué d'un corps (1) étanche aux gaz avec entrée de gaz (3) et sortie de gaz (2), présentant à l'intérieur un siège de vanne (16) pour un bloc de fermeture (15), se déplaçant dans le corps (1), et qui est maintenu ouvert contre le sens de passage par son propre poids et / ou par la force d'un ressort, la section de passage, la surface du bloc de fermeture (15) et les forces étant définies de sorte que le bloc de fermeture (15) quitte sa position ouverte par une valeur définie de l'écoulement de fermeture pour être déplacé contre le siège de vanne (16) du corps (1) de sorte qu'en position de fermeture la sortie du gaz (2) soit fermée et d'une manette (8) disposée à l'extérieur du corps (1) avec un poussoir (7) menant à l'intérieur du corps (1) pour régler la prétension du ressort et / ou la course du bloc de fermeture (15), **caractérisé par le fait que** la manette (8) s'appuie sur une glissière à coulisse (12).

2. Contrôleur de passage de gaz pour la fermeture automatique de tuyauteries de gaz, selon la revendication 1, **caractérisé par le fait que** la glissière à coulisse (12) présente des crans d'arrêt.

3. Contrôleur de passage de gaz pour la fermeture automatique de tuyauteries de gaz, selon la revendication 1 ou 2, **caractérisé par le fait que** la glissière à coulisse (12) présente une pente de commande (31) et que de plus le poussoir (7) se trouve de telle sorte en prise avec une tige (14) du bloc de fermeture (15) que par l'actionnement de la manette (8) le bloc de fermeture (15) sous l'influence de la pente de commande (31) soit déplaçable à partir de sa position de fermeture, la manette (8) quittant d'elle même la zone d'actionnement de la pente de commande (31) quand l'actionnement est terminé.

4. Contrôleur de passage de gaz pour la fermeture automatique de tuyauteries de gaz, selon les revendications de 1 à 3, **caractérisé par le fait que** la liaison entre la manette (8) et le poussoir (7) est ajustable.

5. Contrôleur de passage de gaz pour la fermeture automatique de tuyauteries de gaz, selon les revendications de 1 à 4, **caractérisé par le fait qu'**avec la manette (8) la position de fermeture du bloc de fermeture (15) est ajustable au moyen du poussoir (7) menant à l'intérieur du corps (1).

6. Contrôleur de passage de gaz pour la fermeture automatique de tuyauteries de gaz, selon les revendications de 1 à 5, **caractérisé par le fait que** dans le corps (1) deux ou plusieurs blocs de fermeture (15) sont disposés parallèlement, chacun des blocs de fermeture (15) ayant une manette (8) et un poussoir (7) menant à l'intérieur du corps (1), permettant un réglage de la prétension du ressort et / ou de la course du bloc de fermeture (15).
